# EUROPÄISCHE PATENTSCHRIFT

(11) **EP 2 724 109 B1**
(45) Veröffentlichungstag und Bekanntmachung des Hinweises auf die Patenterteilung: **12.07.2017**
(21) Anmeldenummer: 12724991.0
(22) Anmeldetag: 30.05.2012
(51) Int. Cl.: F28D 15/02, H01M 10/60

(54) **SPEICHEREINHEIT ZUM SPEICHERN ELEKTRISCHER ENERGIE MIT EINER HEAT-PIPE**
STORAGE DEVICE FOR STORING ELECTRICAL ENERGY WITH A HEAT PIPE
DISPOSITIF DE STOCKAGE POUR STOCKER DE L'ENERGIE ELECTRIQUE AVEC UN CALODUC

(30) Priorität: 21.06.2011 DE 102011077924
(43) Veröffentlichungstag der Anmeldung: 30.04.2014
(73) Patentinhaber: Robert Bosch GmbH, 70442 Stuttgart (DE)
(72) Erfinder: HUEHNER, Stefan, 72127 Kusterdingen (DE); DILLMANN, Adolf, 72525 Muensingen (DE); HOLP, Reiner, 72474 Winterlingen (DE)
(86) Internationale Anmeldenummer: PCT/EP2012/060154
(87) Internationale Veröffentlichungsnummer: WO 2012/175300

(56) Entgegenhaltungen:
- DE-A1- 10 259 119
- DE-A1-102008 054 958
- JP-A- 2002 134 177
- JP-A- 2009 277 561
- US-A1- 2003 017 383
- US-A1- 2008 292 949
- US-A1- 2009 141 419
- US-A1- 2009 208 829
- US-A1- 2011 117 410

## Beschreibung

### Stand der Technik

Die Erfindung betrifft eine Speichereinheit zum Speichern elektrischer Energie. Die Speichereinheit weist wenigstens einen Energiespeicher auf.

Die Speichereinheit weist erfindungsgemäß auch eine Kontaktfläche zum Abgeben von Wärme an eine Wärmesenke auf. Die Speichereinheit weist wenigstens eine Heat-Pipe auf, welche mit der Kontaktfläche verbunden ist und mit dem Energiespeicher derart verbunden ist, dass im Inneren des Energiespeichers erzeugte Verlustwärme über die Heat-Pipe an die Kontaktfläche abgeführt werden kann.

Mittels der Heat-Pipe kann vorteilhaft mehr Wärme von dem Energiespeicher zur Wärmesenke abgeführt werden als mittels beispielsweise eines metallischen Wärmeleiters, da die Heat-Pipe im Vergleich zu einem metallischen Wärmeleiter eine deutlich höhere Wärmeleitfähigkeit aufweist. Eine solche Vorrichtung gemäß Oberbegriff des Anspruchs 1 ist z.B. aus der Offenlegungsschrift US 2008 / 0 29 29 49 A1 bekannt. Die Kontaktfläche zum Abgeben von Wärme kann beispielsweise Bestandteil eines Kühlelements sein, insbesondere eines Metallblocks, welches die Kontaktfläche zum Abgeben von Wärme an die Wärmesenke aufweist. Das Kühlelement kann beispielsweise mit der Heat-Pipe, insbesondere im Bereich eines Endes der Heat-Pipe mit der Heat-Pipe verbunden sein.

In einer bevorzugten Ausführungsform weist die Speichereinheit wenigstens zwei Energiespeicher auf. Die Energiespeicher sind über einen Zwischenraum zueinander beabstandet, weiter bevorzugt zueinander benachbart angeordnet. Die Heat-Pipe ist über wenigstens einen Wärmeleiter mit dem Energiespeicher verbunden, wobei der Wärmeleiter in dem Zwischenraum angeordnet ist. Der Wärmeleiter steht bevorzugt mit wenigstens einem an den Zwischenraum grenzenden Energiespeicher in Wirkkontakt. Der Wärmeleiter ist beispielsweise durch ein wärmeleitendes Blech oder einen wärmeleitenden Block gebildet. Das Blech ist beispielsweise ein Metallblech, der Block ist beispielsweise ein Metallblock.

Mit der so gebildeten Anordnung kann vorteilhaft Wärme aus einem Hotspot des Energiespeichers, insbesondere eines Verbundes von zueinander benachbart angeordneten Energiespeichern abgeführt werden.

In einer bevorzugten Ausführungsform ist der Wärmeleiter, insbesondere das Blech, welches in dem Zwischenraum angeordnet ist, federnd ausgebildet. Dadurch kann bei einer wärmebedingten Längenausdehnung der Energiespeicher entlang einer Längsachse des Energiespeichers Wärme über die Heat-Pipe abgeführt werden und mittels der Federeigenschaft des Wärmeleiters die Längenausdehnung der Energiespeicher beim Erwärmen kompensiert werden. Der Wärmeleiter kann in dieser Ausführungsform als federnd ausgebildeter Wärmeleiter beispielsweise durch zwei zueinander parallel angeordnete Bleche gebildet sein, welche über eine Blattfeder entlang der Längsrichtung miteinander verbunden sind, wobei die Blattfeder in dem Zwischenraum zwischen den zueinander parallel angeordneten Blechen angeordnet ist.

In einer bevorzugten Ausführungsform ist wenigstens ein elektrischer Anschluss des Energiespeichers mit einer elektrischen Kontaktschiene verbunden. Die elektrische Kontaktschiene ist mit wenigstens einem äußeren elektrischen Anschluss der Speichereinheit verbunden.

Die Speichereinheit ist bevorzugt ausgebildet, über den äußeren elektrischen Anschluss an eine weitere elektrische Vorrichtung, beispielsweise an eine Traktionsbatterie oder einen Inverter angeschlossen zu werden. Die Kontaktschiene ist mit der Kontaktfläche, bevorzugt mit dem Kühlelement, wärmeleitend verbunden. So kann vorteilhaft zusätzlich zu der Wärmeableitung aus dem Hotspot über die Heat-Pipe Wärme aus dem Inneren des Energiespeichers über die elektrischen Anschlüsse des Energiespeichers abgeführt werden.

Die elektrischen Anschlüsse des Energiespeichers sind beispielsweise jeweils durch eine elektrisch leitfähige Schicht, insbesondere eine Schoop-Schicht gebildet.

In einer bevorzugten Ausführungsform weist die Speichereinheit ein zuvor bereits erwähntes wärmeleitendes Kühlelement auf. Das Kühlelement weist einen nach außen gerichteten Oberflächenbereich auf, der die Kontaktfläche bildet.

In einer bevorzugten Ausführungsform ist der Energiespeicher ein Kondensator. Der Kondensator ist beispielsweise ein Wickelkondensator oder ein Super-Kondensator. Bevorzugt sind elektrische Anschlüsse des Energiespeichers durch eine elektrisch leitfähige Schicht, insbesondere eine Schoop-Schicht gebildet.

In einer anderen Ausführungsform ist der Energiespeicher ein Akkumulator. Der Akkumulator ist beispielsweise ein Nickel-Metallhydrid-Akkumulator, ein Bleiakkumulator, ein Lithium-Ionen-Akkumulator, ein Lithium-Polymer-Akkumulator oder ein Lithium-Eisen-Phosphat-Akkumulator, welcher vorteilhaft mit großen Strömen schnell auf- und entladen werden kann.

Denkbar ist auch eine Kombination aus zueinander verschiedenen Energiespeichern, welche Bestandteil der Speichereinheit sind. Beispielsweise kann die Speichereinheit wenigstens einen Akkumulator als Energiespeicher aufweisen, und wenigstens einen Kondensator als Energiespeicher aufweisen.

In einer bevorzugten Ausführungsform ist der elektrische Anschluss des Energiespeichers, insbesondere die elektrisch leitfähige Schicht, mit der Kontaktschiene elektrisch und wärmeleitend verbunden. Dazu kann die Kontaktschiene beispielsweise mittels wenigstens einer Schweißverbindung oder einer Lötverbindung mit der elektrisch leitfähigen Schicht verbunden sein.

Bevorzugt ist die Heat-Pipe ausgebildet, Wärme mittels Aggregatszustandsänderung eines in der Heat-Pipe eingeschlossenen Fluids im Bereich eines Endes aufzunehmen und im Bereich eines dem Ende gegenüberliegenden Endes wieder abzugeben. Die Heat-Pipe weist beispielsweise im Inneren einen Unterdruck im Vergleich zu einem atmosphärischen Standarddruck von 1013 Hektopascal auf, so dass ein Siedepunkt beziehungsweise Taupunkt des eingeschlossenen Fluids und so ein Temperatur-Arbeitsbereich der Heat-Pipe in Abhängigkeit des Unterdrucks festgelegt ist.

In einer bevorzugten Ausführungsform umfasst die Heat-Pipe wenigstens eine fluidgefüllte Röhre. Das Fluid ist beispielsweise Wasser, Ammonium, Alkohol, insbesondere Ethanol oder Isopropanol. Erfindungsgemäß ist der Wärmeleiter mittels einer Führungshülse mit der Heatpipe auf einem Längsabschnitt der Heat-Pipe wärmeleitend verbunden, wobei die Führungshülse ausgebildet ist, die Heat-Pipe federnd und wärmeleitend derart festzuhalten, dass die Führungshülse entlang einer Längserstreckung der Heat-Pipe hin- und hergeschoben werden kann. Dadurch kann der Wärmeleiter im Bereich eines Verbindungsortes mit der Heat-Pipe bei einer Wärmeausdehnung des Energiespeichers nicht brechen oder reißen.

In einer anderen vorteilhaften Ausführungsform ist die Heat-Pipe flach ausgebildet. Weiter bevorzugt weist die Heat-Pipe einen Querschnitt auf, wobei eine Querschnittsbreite größer ist als eine Querschnittshöhe. So kann die Heat-Pipe in einer quaderförmigen Speichereinheit vorteilhaft platzsparend angeordnet werden. Bevorzugt beträgt ein Verhältnis Querschnittsbreite zu Querschnittshöhe des Querschnitts der flach ausgebildeten Heat-Pipe 30 zu 1. Eine Querschnittshöhe der flach ausgebildeten Heat-Pipe beträgt beispielsweise zwischen 1 Millimeter und 3 Millimeter.

Die Speichereinheit ist beispielsweise ein Zwischenkreiskondensator eines elektrischen Antriebs eines Elektrofahrzeugs. In einer anderen Ausführungsform ist die Speichereinheit ein Zwischenkreiskondensator eines Solarinverters.

Die Erfindung wird nun im Folgenden anhand von Figuren und weiteren Ausführungsbeispielen beschrieben. Weitere vorteilhafte Ausführungsvarianten ergeben sich aus den Merkmalen der Figuren und den in den abhängigen Ansprüchen beschriebenen Merkmalen.
Figur 1 zeigt schematisch ein Ausführungsbeispiel für eine Speichereinheit mit einer Heatpipe;
Figur 2 zeigt schematisch die Anbindung der in Figur 1 gezeigten Heat-Pipe an den Wärmeleiter mittels einer Führungshülse, in der die Heat-Pipe hin- und herverschoben werden kann in einer Detaildarstellung;
Figur 3 zeigt schematisch ein Ausführungsbeispiel für die in Figur 1 in einem Längsschnitt dargestellte und in dieser Figur teilweise dargestellte Speichereinheit, welche ausgebildet ist, Wärme von einem elektrischen Anschluss eines Energiespeichers und über eine mit wenigstens einem Hot-Spot des Energiespeichers wärmeleitend verbundene Heat-Pipe an eine Bodenplatte der Speichereinheit abzuführen.

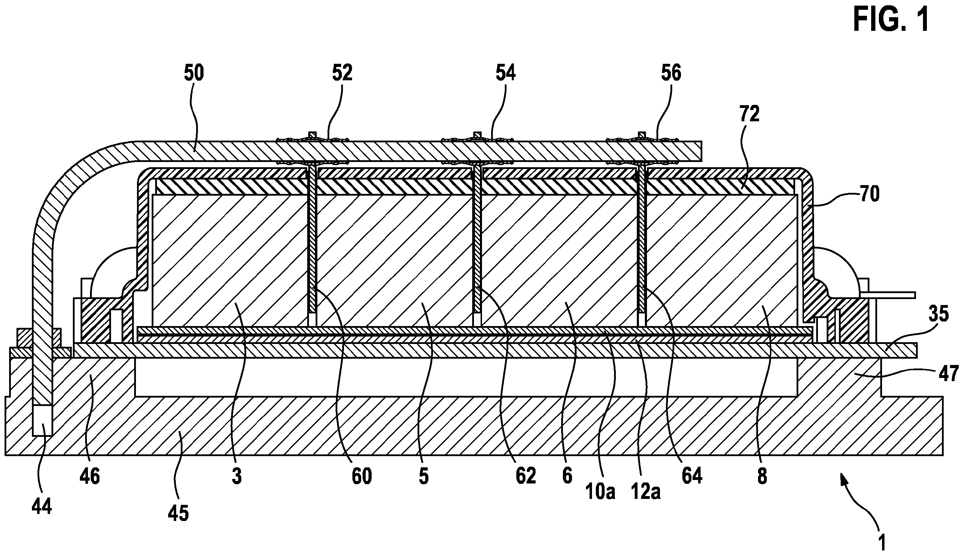

Figur 1 zeigt ein Ausführungsbeispiel für eine Speichereinheit 1. Die Speichereinheit 1 weist einen Energiespeicher 3, einen Energiespeicher 5, einen Energiespeicher 6 und einen Energiespeicher 8 auf. Die Energiespeicher 3, 5, 6 und 8 sind in diesem Ausführungsbeispiel jeweils als Wickelkondensator ausgebildet. Denkbar ist auch eine Ausführungsform der Energiespeicher als Akkumulator.

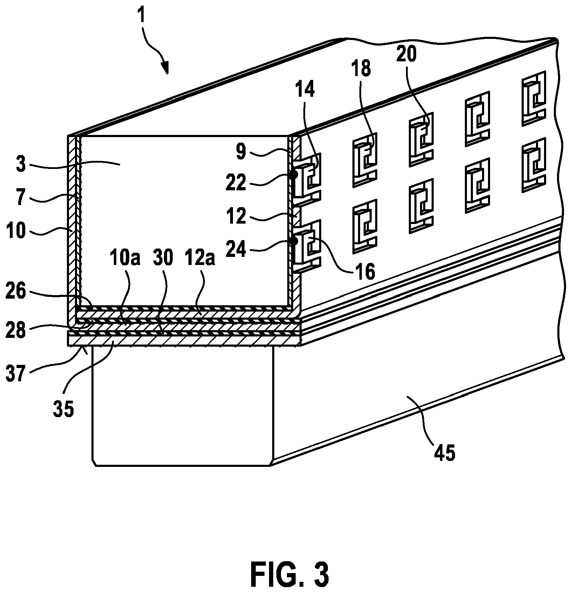

Die Energiespeicher 3, 5, 6 und 8 sind jeweils entlang einer Längserstreckung der Speichereinheit 1 in einer Art Rinne oder Wanne aufgenommen, wobei die Rinne durch zwei Kontaktschienen gebildet ist. Die Kontaktschienen sind jeweils durch ein abgewinkeltes Blech gebildet. Die Kontaktschienen, welche die Rinne bilden, sind in Figur 3 in einer Schnittdarstellung näher dargestellt.

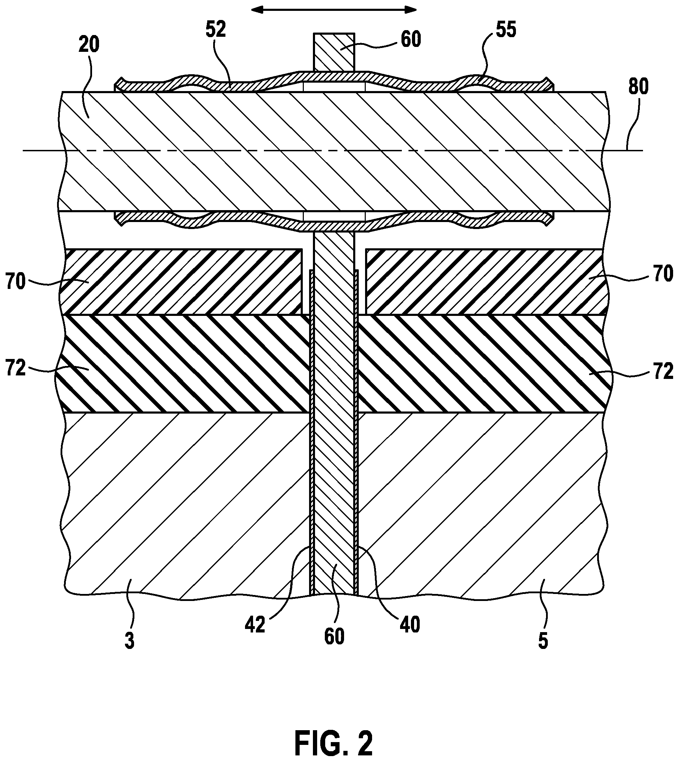

Der Energiespeicher 3 ist entlang der Längserstreckung der Speichereinheit 1 von dem Energiespeicher 5 durch einen Zwischenraum getrennt. Der Energiespeicher 5 ist von dem Energiespeicher 6 durch einen Zwischenraum getrennt, und der Energiespeicher 6 ist vom Energiespeicher 8 durch einen Zwischenraum getrennt. In dem Zwischenraum zwischen dem Energiespeicher 3 und 5 ist ein Wärmeleiter 60 angeordnet. In dem Zwischenraum zwischen dem Energiespeicher 5 und dem Energiespeicher 6 ist ein Wärmeleiter 62 angeordnet, und in dem Zwischenraum zwischen dem Energiespeicher 6 und dem Energiespeicher 8 ist ein Wärmeleiter 64 angeordnet. Die Wärmeleiter 60, 62 und 64 sind beispielsweise durch ein wärmeleitendes Blech, insbesondere ein Kupferblech gebildet. Die Wärmeleiter 60, 62 und 64 sind - wie in Figur 2 näher dargestellt - jeweils mittels einer elektrisch isolierenden Wärmeleitfolie mit den Kontaktflächen der Energiespeicher verbunden, die mit dem Wärmeleiter wärmeleitend in Verbindung stehen.

In Figur 1 sind in der Schnittdarstellung die abgewinkelten Abschnitte 10a und 12a der Kontaktschienen gezeigt, welche zusammen einen Boden der vorab erwähnten Rinne bilden. Die Kontaktschienen sind jeweils elektrisch voneinander isoliert. Mit den Abschnitten 10a und 12a der Kontaktschienen steht ein Kühlelement 35 in thermischem Wirkkontakt, welches mit einer Oberfläche in den Abschnitt 12a thermisch kontaktiert. Das Kühlelement 35 ist in diesem Ausführungsbeispiel durch eine wärmeleitfähige Platte, insbesondere eine Aluminium-oder Kupferplatte gebildet. Das Kühlelement 35 steht über einen Kühldom 47 und über einen Kühldom 46 mit einem weiteren Kühlelement 45 (Wärmesenke) wärmeleitend in Verbindung.

Die Speichereinheit 1 weist auch eine Heat-Pipe 50 auf. Die Heat-Pipe 50 ist in diesem Ausführungsbeispiel als Röhre mit rundem Querschnitt ausgebildet. Denkbar ist auch eine Heat-Pipe 50 mit einem flachen, insbesondere rechteckigen Querschnitt, bei dem eine Querschnittshöhe kleiner ist als eine Querschnittsbreite. Die Heat-Pipe 50 mündet mit einem Ende in eine Ausnehmung 44 des Kühlelements 45 im Bereich des Kühldoms 46. Die Kühldome 46 und 47 sind entlang einer Längserstreckung der Speichereinheit 1 voneinander beabstandet. Die Heat-Pipe 50 steht über eine wärmeleitfähige Führungshülse 52 mit dem Wärmeleiter 60 in thermischer Wirkverbindung. Die Heat-Pipe 50 steht auch entlang der Längserstreckung der Heat-Pipe 50 von der Führungshülse 52 beabstandet - mit dem Wärmeleiter 62 in thermischer Wirkverbindung. Die Heat-Pipe 50 steht entlang der Längserstreckung von der Führungshülse 54 beabstandet über eine Führungshülse 56 mit dem Wärmeleiter 64 wärmeleitend in Verbindung. Die Führungshülse 52 ist in Figur 2 näher dargestellt. Die Führungshülsen 52, 54 und 56 umschließen die Heat-Pipe 50 wenigstens auf einem Längsabschnitt und halten diese wenigstens kraftschlüssig auf dem Längsabschnitt federnd fest. Die Speichereinheit 1 weist auch ein Gehäuse 70 auf, welches die Energiespeicher 3, 5, 6 und 8 umschließt. Das Gehäuse 70 ist beispielsweise aus einem Kunststoff gebildet. Zwischen einer Gehäusewand des Gehäuses 70 und den Energiespeichern 3, 5, 6 und 8 ist in diesem Ausführungsbeispiel ein flächig ausgebildetes Federelement 72 angeordnet, welches beispielsweise durch einen Schaumstoff gebildet ist. Mittels des Federelements 72 kann die Gehäusewand des Gehäuses 70, welche in diesem Ausführungsbeispiel wannenförmig ausgebildet ist, die Energiespeicher gegen die wärmeleitfähige Platte 35 andrücken. Die Energiespeicher 3, 5, 6 und 8 sind so in dem Gehäuse 70 festgehalten.

Mittels der Wärmeleiter 60, 62 und 64 kann jeweils aus einem Bereich der Energiespeicher 3, 5, 6 und 8, welcher einen Hot-Spot bildet, Wärme aus dem Inneren eines Mittels der aneinandergefügten energiespeichergebildeten Blocks abgeführt werden. Die Heat-Pipe 50 weist dazu vorteilhaft eine wesentlich höhere Wärmeleitfähigkeit auf, als beispielsweise massives Kupfer.

Figur 2 zeigt die in Figur 1 bereits dargestellte Anbindung der Heat-Pipe 50 an die Wärmeleiter 60, 62 und 64 am Beispiel des Wärmeleiters 60. Die Heat-Pipe 20, welche in dieser Figur auf einem Längsabschnitt dargestellt ist, steht längsabschnittsweise mit der Führungshülse 52 in thermischer Wirkverbindung. Die Führungshülse 52 weist dazu eine hohlzylindrische Form auf, wobei der Längsabschnitt der Heat-Pipe 50 in dem von dem Hohlzylinder umschlossenen sich längserstreckenden Hohlraum angeordnet ist. Die Führungshülse 52 weist in dieser Ausführungsform entlang ihrer Längserstreckung wenigstens eine ringförmige Prägung auf, wobei die ringförmige Prägung 55 beispielhaft bezeichnet ist. Die ringförmige Prägung 55 erstreckt sich radial nach außen. An geringförmige Prägung schließt sich entlang der Längserstreckung der Führungshülse 52 ein Längsabschnitt an, welcher die Heat-Pipe 50 federnd festhält und an dem Längsabschnitt der Führungshülse 52 wärmeleitend kontaktiert.

Der Wärmeleiter 60, welcher in diesem Ausführungsbeispiel als wärmeleitfähiges Blech ausgebildet ist, weist einen Durchbruch auf, in welchem die Heat-Pipe 50 über die Führungshülse 52 den Wärmeleiter 60 wenigstens auf einem Längsabschnitt im Bereich des Durchbruchs thermisch kontaktiert. Die Heat-Pipe 50 kann so von dem Wärmeleiter 60 im Bereich des Durchbruchs, insbesondere von einer Innenwand des Durchbruchs, Wärme über die Führungshülse 52 und über die Kontaktstellen der Führungshülse 52 mit der Heat-Pipe 50 Wärme aufnehmen. Die Heat-Pipe 50 ist in der Führungshülse 52 entlang einer Längserstreckung 80 der Heat-Pipe hin- und herschiebbar angeordnet. Die Heat-Pipe 50 kann sich so bei einer thermisch bedingten Längsausdehnung der Energiespeicher 3, 5, 6 und 8 innerhalb der Führungshülsen 52, 54 und 56 bewegen. Die Wärmeleiter 60, 62 und 64 erstrecken sich dabei senkrecht zu der Längserstreckung 80 der Heat-Pipe 50.

Der Energiespeicher 5 ist über eine wärmeleitfähige und elektrisch isolierende Schicht, in diesem Ausführungsbeispiel eine Polyimidschicht mit dem Wärmeleiter 60 verbunden. Der Energiespeicher 3 ist über eine wärmeleitfähige und elektrisch isolierende Schicht 52 mit dem Wärmeleiter 60 verbunden. So kann Wärme von dem Energiespeicher 3 und 5 über die wärmeleitfähigen Isolationsschichten 40 und 42 in den Wärmeleiter 60 fließen. Vom Wärmeleiter 60 kann die Wärme weiter über die Führungshülse 52 in die Heat-Pipe 50 fließen. Auch bei einer Verschiebung der Führungshülse 52, welche mit dem Wärmeleiter 60 verbunden ist, entlang der Längserstreckung 80 der Heat-Pipe 50 wird der Wärmeleiter 60 nicht verbogen bzw. hin- und hergebogen, sodass der Wärmeleiter 60 im Bereich der Verbindung mit der Heat-Pipe 50 bedingt durch eine thermisch bedingte Längenänderung der Energiespeicher 3 und 5 nicht brechen kann.

Denkbar aber nicht Teil der Erfindung ist auch eine thermische Anbindung des Wärmeleiters 60 an die Heat-Pipe 50 mit einem Übergang, der beispielsweise durch Löten, Schweißen oder durch Aufschrumpfen gebildet ist. Dazu ist die Heat-Pipe 50 beispielsweise in einem Durchbruch des Wärmeleiters 60 von dem Wärmeleiter 60 fest umschlossen. Der Wärmeleiter 60 kann dazu beispielsweise aus einem federnd ausgebildeten Kupfer, insbesondere einer Kupferlegierung ausgebildet sein.

Der Wärmeleiter weist dazu bevorzugt eine Beimengung umfassend Chrom, Silber, Eisen, Titan, Silizium, und zum größten Teil Kupfer auf.

Die Anteile der Beimengung beträgt bevorzugt 0,5 % Chrom, 0,1 % Silber, 0,08 % Eisen, 0,06 % Titan und 0,03 % Silizium. Eine elektrische Leitfähigkeit der Litze oder des Vlieses beträgt bevorzugt wenigstens 40, bevorzugt 46 Mega-Siemens pro Meter.

Beispielsweise ist das Material des Wärmeleiters eine Kupferlegierung gemäß der US-Norm United-Numbering-System C18080. Figur 3 zeigt schematisch ein Ausführungsbeispiel für eine Speichereinheit 1. Die Speichereinheit 1 weist einen Energiespeicher 3 auf. Der Energiespeicher 3 weist einen positiven elektrischen Anschluss 7 auf, welcher in Form einer elektrisch leitfähigen Schicht, insbesondere einer Metallschicht gebildet ist. Die Metallschicht ist beispielsweise eine Schoopschicht, welche beispielsweise durch eine Legierung umfassend Kupfer und Zink gebildet ist. In einer anderen Ausführungsform oder zusätzlich dazu ist die Schoopschicht aus Aluminium gebildet.

Der Energiespeicher 3 weist auch einen negativen elektrischen Anschluss 9 auf. Der negative elektrische Anschluss 9 ist durch eine Schicht, insbesondere eine elektrisch leitfähige Metallschicht, beispielsweise eine Schoopschicht gebildet. Der Energiespeicher 3 ist in diesem Ausführungsbeispiel quaderförmig ausgebildet. Die mittels elektrisch leitfähige Schichten gebildeten Anschlüsse 7 und 9 sind jeweils flach, bevorzugt eben ausgebildet und sind an zueinander gegenüberliegenden Stirnseiten des Energiespeichers angeordnet. Zwischen den Stirnseiten des Energiespeichers 3 erstreckt sich beispielsweise eine Längsachse, um die ein Kondensator, insbesondere ein Wickelkondensator gewickelt ist. Die Längsachse erstreckt sich somit orthogonal zu den Schichten 7 und 9.

Die Schicht 9, welche den negativen elektrischen Anschluss des Energiespeichers 3 bildet, ist in diesem Ausführungsbeispiel mit einem L-förmigen Kontakt 14 mittels einer Schweißverbindung, insbesondere einer Punktschweißverbindung 22 elektrisch verbunden. Dargestellt ist auch ein L-förmiger Kontakt 16, welcher mittels einer Punktschweißverbindung 24 mit dem Anschluss 9 elektrisch verbunden ist. Die L-förmigen Kontakte sind jeweils durch Stanzen aus einem Blech gebildet, welches eine Kontaktschiene 12 bildet. Die Kontakte 14 und 16 sind in diesem Ausführungsbeispiel an die Kontaktschiene 12 angeformt. Dargestellt sind auch weitere L-förmige Kontakte, von denen die Kontakte 18 und 20 beispielhaft bezeichnet sind. Die L-förmigen Kontakte federn bei einer thermischen Ausdehnung des Energiespeichers vorteilhaft in drei Dimensionen, so dass der Kontakt nicht von dem Anschluss abreißen kann.

Die Kontaktschiene 12 ist in diesem Ausführungsbeispiel durch ein abgewinkeltes Blech gebildet, wobei ein abgewinkelter Abschnitt 12a der Kontaktschiene 12 sich in diesem Ausführungsbeispiel senkrecht zu dem Abschnitt erstreckt, in dem die Kontakte ausgebildet sind. Die Speichereinheit 1 weist auch eine negative Kontaktschiene 10 auf, welche - wie die Kontaktschiene 12 - mit einer elektrisch leitfähigen Schicht 7 verbunden ist, wobei die elektrisch leitfähige Schicht 7 den negativen Anschluss des Energiespeichers 3 bildet. Die Schicht 7 ist beispielsweise durch eine Schoopschicht gebildet. Die negative Kontaktschiene 10 weist wie die positive Kontaktschiene 12 einen abgewinkelten Abschnitt 10a auf, welcher sich senkrecht zu dem Abschnitt der Kontaktschiene erstreckt, welcher mit dem elektrischen Anschluss 7 elektrisch verbunden ist.

Die Kontakte der Kontaktschienen 10 und 12, welche jeweils mit dem Anschluss 7 beziehungsweise 9 verbunden sind, erstrecken sich in diesem Ausführungsbeispiel parallel zu den schichtförmig gebildeten Anschlüssen 7 und 9 und können diese beispielsweise berühren. Dadurch kann ein zusätzlicher elektrischer galvanischer Kontakt gebildet sein, welcher neben den Schweißverbindungen 22 und 24 die Anschlüsse mit den Kontaktschienen elektrisch verbindet, insbesondere wenn die Schweißverbindung reißt.

Die abgewinkelten Abschnitte 10a und 12a der Kontaktschienen 10 und 12 sind in diesem Ausführungsbeispiel einander überlappend angeordnet, wobei die sich jeweils eben erstreckenden Blechbereiche der Abschnitte 10a und 12a einander überlappen und so übereinander liegen. Zwischen den Abschnitten 10a und 12a ist eine elektrisch isolierende und thermisch leitfähige Isolationsschicht 28 angeordnet.

Die Kontaktschienen 10 und 12 bilden so eine Art Rinne oder Wanne, welche den Energiespeicher 3 wenigstens teilweise, in diesem Ausführungsbeispiel vollständig, aufnimmt. Die Blechabschnitte der Kontaktschienen 10 und 12, welche sich parallel zueinander erstrecken und jeweils mit einem Anschluss des Energiespeichers 3 verbunden sind, bilden jeweils eine Wand der Rinne.

Die Kontaktschienen sind in diesem Ausführungsbeispiel aus Blech gebildet, das eine Dicke zwischen 0,5 und 2 Millimeter aufweist. Die Speichereinheit weist beispielsweise eine Länge von 20 bis 30 Zentimeter und ein Abstand zwischen den Kontaktschienen von 3 bis 5 Zentimeter auf. Der Abschnitt 10a oder 12a bildet einen Boden der Rinne oder Wanne, je nach dem, welcher Abschnitt auf dem anderen liegt und so zu dem Energiespeicher 3 hinweist. Zwischen dem Abschnitt, welcher den Boden der Rinne oder Wanne bildet und dem Energiespeicher 3 ist in diesem Ausführungsbeispiel eine elektrische Isolationsschicht 26 angeordnet.

Die Isolationsschicht 26 und/oder 28 kann beispielsweise durch eine Klebefolie gebildet sein, wobei die Folie eine Kunststofffolie ist, welche auf einem Oberflächenbereich der Kunststofffolie mit einem Klebstoff beschichtet ist.

Der Klebstoff ist beispielsweise ein Acrylklebstoff oder ein Heißkleber.

In einer anderen Ausführungsform ist der Klebstoff ein Phase-Change-Material, insbesondere mit einem Matrixmaterial umfassend Silikon oder Acryl, welche jeweils vorteilhaft beim Phasenwechsel nicht wegfließen können. Das Matrixmaterial weist -insbesondere bei dem Matrixmaterial umfassend Silikon oder Acryl - vorteilhaft wenigstens bei Raumtemperatur eine klebrige Eigenschaft auf, so dass die Kontaktschienen mittels des Phase-Change-Materials bei Raumtemperatur aneinanderhaftend zusammengesetzt werden können.

Das Phase-Change-Material weist bevorzugt Festkörperpartikel auf. Die Festkörperpartikel sind bevorzugt Keramikpartikel, insbesondere Aluminiumoxidpartikel, Siliziumoxidpartikel, Siliziumnitridpatrtikel, Bornitrid-Partikel oder Aluminiumnitrid-Partikel, oder eine Kombination aus diesen. Durch das Phase-Change-Material kann vorteilhaft kein Luftpolster zwischen den Kontaktschienen oder der Kontaktschiene und der Platte entstehen, da das Phase-Change-Material bevorzugt eine Phasenwechseltemperatur kleiner als die Betriebstemperatur der Speichereinheit aufweist. Die Phasenwechseltemperatur beträgt beispielsweise zwischen 50 und 70 Grad Celsius. Die Festkörperpartikel weisen jeweils bevorzugt eine gute Wärmeleitfähigkeit auf, so dass mit diesen ein Wärmeleiter gebildet ist, der in das Phase-Change-Material als Matrixmaterial eingebunden ist.

Die Isolationsschicht ist bevorzugt eine Polyimidfolie oder eine Polyethylenfolie. Die Polyimidfolie weist bevorzugt eine Stärke zwischen 10 und 100 Mikrometer auf. Die Polyimidfolie ist bevorzugt ausgebildet, eine elektrische Spannung zwischen 1.000 und 4.000 Volt zu isolieren.

Der Abschnitt 12a der Kontaktschiene 12 bildet in diesem Ausführungsbeispiel einen Boden des Innenraums der mittels der Kontaktschienen 10 und 12 gebildeten Rinne, wohingegen der Abschnitt 10a der Kontaktschiene 10 einen Teil des Bodens bildet, welcher mit einer Oberfläche nach außen weist. Die nach außen weisende Oberfläche des Abschnitts 10a ist in diesem Ausführungsbeispiel mit einer wärmeleitfähigen Platte 35, in diesem Ausführungsbeispiel einer Aluminiumplatte, verbunden. Die Platte 35 bildet in diesem Ausführungsbeispiel ein Kühlelement, an das Wärme abgeführt werden kann.

Die in dem Energiespeicher 3 erzeugte Wärme kann so vorteilhaft über die elektrischen Anschlüsse 7 und 9, weiter über die Schweißverbindungen 22 und 24, über die L-fömigen Kontakte 14 und 16, und weiter über die Kontaktschiene 12 zu dem abgewinkelten Bereich 12a der Kontaktschiene 12 fließen, von dort fließt die Wärme weiter über den Isolator 28 in den abgewinkelten Abschnitt 10a der Kontaktschiene 10, welcher zusammen mit dem Abschnitt 12a den Boden der Rinne bildet, die den Energiespeicher 3 aufnimmt. Von dem abgewinkelten Abschnitt 10a kann die Wärme weiter über einen thermisch leitfähigen elektrischen Isolator 30, welcher in diesem Ausführungsbeispiel durch eine Isolationsschicht, insbesondere eine Isolationsfolie gebildet ist, zu der Platte 35 fließen, welche in diesem Ausführungsbeispiel eine Wärmesenke bildet. Die Platte 35 weist einen Oberflächenbereich auf, der eine Außenfläche 37 der Speichereinheit 1 bildet.

Mit der Außenfläche 37 der Platte 35 ist in diesem Ausführungsbeispiel ein Kühlkörper 45 (Wärmesenke) thermisch leitfähig verbunden, wobei der Kühlkörper 45 beispielsweise zueinander beabstandete Kühlrippen aufweist, welche mittels Konvektion Wärme an eine Umgebungsluft abgeben kann. Denkbar ist auch ein zum Fluidführen ausgebildeter Wärmetauscher als weiteres Kühlelement.

## Patentansprüche

1. Speichereinheit (1) zum Speichern elektrischer Energie, mit wenigstens einem Energiespeicher (3, 5, 6, 7), wobei die Speichereinheit (1) eine Kontaktfläche (37) zum Abgeben von Wärme an eine Wärmesenke (45) aufweist, und die Speichereinheit (1) wenigstens eine Heat-Pipe (50) aufweist, welche mit der Wärmesenke (45) verbunden ist und mit dem Energiespeicher (3, 5, 6, 8) derart verbunden ist, dass eine im Inneren des Energiespeichers (3, 5, 6, 8) erzeugte Verlustwärme über die Heat-Pipe (50) an die Wärmesenke (45) abgeführt werden kann, wobei der Wärmeleiter (60, 63, 64) mittels einer Führungshülse (52, 54, 56) mit der Heatpipe (50) auf einem Längsabschnitt der Heat-Pipe (50) wärmeleitend verbunden ist, **dadurch gekennzeichnet, dass** die Führungshülse (52, 54, 56) ausgebildet ist, die Heat-Pipe (50) federnd und wärmeleitend derart festzuhalten, dass die Führungshülse (52, 54, 56) entlang einer Längserstreckung der Heat-Pipe (50) hin- und hergeschoben werden kann.

2. Speichereinheit (1) nach Anspruch 1, **dadurch gekennzeichnet, dass**
die Speichereinheit (1) wenigstens zwei Energiespeicher (3, 5, 6, 8) aufweist, die über einen Zwischenraum zueinander beabstandet angeordnet sind und die Heat-Pipe (50) über wenigstens einen Wärmeleiter (60, 63, 64) mit dem Energiespeicher (3, 5, 6, 8) verbunden ist, wobei der Wärmeleiter (60, 62, 64) in dem Zwischenraum angeordnet und mit wenigstens einem an den Zwischenraum grenzenden Energiespeicher (3, 5, 6, 8) in Wirkkontakt steht.

3. Speichereinheit (1) nach einem der vorhergehenden Ansprüche,
**dadurch gekennzeichnet, dass** wenigstens ein elektrischer Anschluss (7, 9) des Energiespeichers (3, 5, 6, 8) mit einer elektrischen Kontaktschiene (10, 12) verbunden ist, wobei die Kontaktschiene (10,12) mit wenigstens einem äußeren Anschluss der Speichereinheit (1) verbunden ist und die Kontaktschiene (10, 12) mit der Kontaktfläche (37) wärmeleitend verbunden ist.

4. Speichereinheit (1) nach einem der vorhergehenden Ansprüche,
**dadurch gekennzeichnet, dass** die Speichereinheit (1) ein wärmeleitendes Kühlelement (35) aufweist, das einen nach außen gerichteten Oberflächenbereich aufweist, der die Kontaktfläche (37) bildet.

5. Speichereinheit (1) nach einem der vorhergehenden Ansprüche,
**dadurch gekennzeichnet, dass** der Energiespeicher (3, 5, 6, 8) ein Kondensator ist.

6. Speichereinheit (1) nach einem der vorhergehenden Ansprüche 1 bis 5,
**dadurch gekennzeichnet, dass** der Energiespeicher (3, 5, 6, 8) ein Akkumulator ist.

7. Speichereinheit (1) nach Anspruch 4, **dadurch gekennzeichnet, dass**
der Energiespeicher (3, 5, 6, 8) ein Wickelkondensator ist.

8. Speichereinheit (1) nach Anspruch 7, **dadurch gekennzeichnet, dass**
der Wickelkondensator als elektrischen Anschluss (7, 9) eine elektrisch leitfähige Schicht aufweist, die mit der Kontaktschiene (10, 12) elektrisch und wärmeleitend verbunden ist.

9. Speichereinheit (1) nach einem der vorhergehenden Ansprüche,
**dadurch gekennzeichnet dass** die Heat-Pipe (50) flach ausgebildet ist.

## Claims

1. Storage unit (1) for storing electrical energy comprising at least one energy store (3, 5, 6, 7), wherein
the storage unit (1) comprises a contact area (37) for dissipating heat to a heat sink (45), and the storage unit (1) comprises at least one heat pipe (50) that is connected to the heat sink (45) and connected to the energy store (3, 5, 6, 8) in such a manner that heat losses that are generated inside the energy store (3, 5, 6, 8) can be dissipated to the heat sink (45) by way of the heat pipe (50),
wherein the heat conductor (60, 63, 64) is connected in a heat conducting manner to the heat pipe (50) on a longitudinal section of the heat pipe (50) by means of a guide bushing (52, 54, 56), **characterized in that** the guide bushing (52, 54, 56) is embodied to hold the heat pipe (50) in place in a resilient and heat conducting manner in such a manner that the guide bushing (52, 54, 56) can be moved back and forth along a longitudinal extension of the heat pipe (50).

2. Storage unit (1) according to Claim 1, **characterized in that**, the storage unit (1) comprises at least two energy stores (3, 5, 6, 8) that are arranged spaced apart from one another by way of an intermediate space and the heat pipe (50) is connected to the energy store (3, 5, 6, 8) by way of at least one heat conductor (60, 63, 64), wherein the heat conductor (60, 62, 64) is arranged in the intermediate space and is in operative contact with at least one energy store (3, 5, 6, 8) that is bordered by the intermediate space.

3. Storage unit (1) according to either of the preceding claims, **characterized in that**, in a preferred embodiment at least one electrical connector (7, 9) of the energy store (3, 5, 6, 8) is connected to an electrical contact rail (10, 12), wherein the contact rail (10, 12) is connected to at least one external connector of the storage unit (1) and the contact rail (10, 12) is connected to the contact area (37) in a heat conducting manner.

4. Storage unit (1) according to any one of the preceding claims, **characterized in that**, the storage unit (1) comprises a heat conductive cooling element (35), which comprises an externally directed surface region that embodies the contact area (37).

5. Storage unit (1) according to any one of the preceding claims, **characterized in that**, the energy store (3, 5, 6, 8) is a capacitor.

6. Storage unit (1) according to any one of the preceding Claims 1 to 5, **characterized in that**, the energy store (3, 5, 6, 8) is a battery.

7. Storage unit (1) according to Claim 4, **characterized in that**, the energy store (3, 5, 6, 8) is a rolled-type capacitor.

8. Storage unit (1) according to Claim 7, **characterized in that**, the rolled-type capacitor comprises an electrically conductive layer as an electrical connector (7, 9), which layer is connected to the contact rail (10, 12) in an electrical and heat conducting manner.

9. Storage unit (1) according to any one of the preceding claims, **characterized in that** the heat pipe (50) is embodied in a planar manner.

## Revendications

1. Unité de stockage (1) servant à accumuler de l'énergie électrique, comportant au moins un accumulateur d'énergie (3, 5, 6, 7), dans laquelle l'unité de stockage (1) comporte une surface de contact (37) permettant de dissiper la chaleur vers un puits thermique (45), et l'unité de stockage (1) comporte au moins un caloduc (50) qui est relié au puits thermique (45) et qui est relié à l'accumulateur d'énergie (3, 5, 6, 8) de manière à ce qu'une dissipation de chaleur produite à l'intérieur de l'accumulateur d'énergie (3, 5, 6, 8) puisse être évacuée par l'intermédiaire du caloduc (50) vers le puits thermique (45), dans laquelle le conducteur thermique (60, 63, 64) est relié de manière thermiquement conductrice au moyen d'une douille de guidage (52, 54, 56) au caloduc (50) sur une partie longitudinale du caloduc (50), **caractérisée en ce que** la douille de guidage (52, 54, 56) est réalisée afin de fixer de manière élastique et thermiquement conductrice le caloduc (50) de façon à ce que la douille de guidage (52, 54, 56) puisse être déplacée selon un mouvement de va-et-vient le long d'une extension longitudinale du caloduc (50).

2. Unité de stockage (1) selon la revendication 1, **caractérisée en ce que** l'unité de stockage (1) comporte au moins deux accumulateurs d'énergie (3, 5, 6, 8) qui sont disposés de manière espacée l'un de l'autre par un espace intermédiaire et le caloduc (50) est relié à l'accumulateur d'énergie (3, 5, 6, 8) par l'intermédiaire d'au moins un conducteur thermique (60, 63, 64), dans laquelle le conducteur thermique (60, 62, 64) est disposé dans l'espace intermédiaire et est en contact fonctionnel avec au moins un accumulateur d'énergie (3, 5, 6, 8) adjacent à l'espace intermédiaire.

3. Unité de stockage (1) selon l'une quelconque des revendications précédentes, **caractérisée en ce qu'**au moins une borne électrique (7, 9) de l'accumulateur d'énergie (3, 5, 6, 8) est reliée à un rail de contact (10, 12) électrique, dans laquelle le rail de contact (10, 12) est relié à au moins une borne extérieure de l'unité de stockage (1) et le rail de contact (10, 12) est relié de manière thermiquement conductrice à la surface de contact (37).

4. Unité de stockage (1) selon l'une quelconque des revendications précédentes, **caractérisée en ce que** l'unité de stockage (1) comporte un élément de refroidissement thermiquement conducteur (35) comportant une zone de surface supérieure orientée vers l'extérieur qui forme la surface de contact (37).

5. Unité de stockage (1) selon l'une quelconque des revendications précédentes, **caractérisée en ce que** l'accumulateur d'énergie (3, 5, 6, 8) est un condensateur.

6. Unité de stockage (1) selon l'une quelconque des revendications 1 à 5 précédentes, **caractérisée en ce que** l'accumulateur d'énergie (3, 5, 6, 8) est un accumulateur.

7. Unité de stockage (1) selon la revendication 4, **caractérisée en ce que** l'accumulateur d'énergie (3, 5, 6, 8) est un condensateur enroulé.

8. Unité de stockage (1) selon la revendication 7, **caractérisée en ce que** le condensateur enroulé comporte, en tant que borne électrique (7, 9), une couche électriquement conductrice qui est reliée de manière électriquement et thermiquement conductrice au rail de contact (10, 12).

9. Unité de stockage (1) selon l'une quelconque des revendications précédentes, **caractérisée en ce que** le caloduc (50) est réalisé de manière plane.
